(19) Europäisches Patentamt

European Patent Office

Office européen des brevets

(11) Veröffentlichungsnummer: **0 428 059 A1**

## (12) EUROPÄISCHE PATENTANMELDUNG

(21) Anmeldenummer: **90121346.2**

(22) Anmeldetag: **08.11.90**

(30) Priorität: **11.11.89 DE 3937598**

(43) Veröffentlichungstag der Anmeldung:
**22.05.91 Patentblatt 91/21**

(84) Benannte Vertragsstaaten:
**DE FR GB NL**

(51) Int. Cl.5: **A47J 17/18**

(71) Anmelder: **Dornow, Karl Dietrich**
**Kaiser-Friedrich-Ring 96**
**W-4000 Düsseldorf 11(DE)**

(72) Erfinder: **Dornow, Karl Dietrich**
**Kaiser-Friedrich-Ring 96**
**W-4000 Düsseldorf 11(DE)**

(74) Vertreter: **Bergen, Klaus, Dipl.-Ing. et al**
**Patentanwälte Dr.-Ing. Reimar König**
**Dipl.-Ing. Klaus Bergen Wilhelm-Tell-Strasse**
**14 Postfach 260162**
**W-4000 Düsseldorf 1(DE)**

(54) Topfschälmaschine zum mechanischen Schälen von Erd- oder Baumfrüchten.

㉗ Bei einer Topfschälmaschine (1) zum mechanischen Schälen von nicht angekochten und/oder nicht angeweichten, rohen Erd- oder Baumfrüchten, mit einem in einem Gehäuse (2) angeordneten, Durchbrechungen (9) aufweisenden Schälmantel (6) und einer rotierenden Bodenscheibe (3) wird die Betriebsweise verbessert und ein Schälen ohne oder allenfalls mit nur sehr wenig Frischwasser ermöglicht, wenn die Innenwandung (8) des Schälmantels (6) mit körnigem Karborund versehen ist und die Durchbrechungen (9) stumpfe Kanten aufweisen, so daß sie ausschließlich der Abfuhr der Schälreste dienen.

Fig. 2

EP 0 428 059 A1

# TOPFSCHÄLMASCHINE ZUM MECHANISCHEN SCHÄLEN VON ERD- ODER BAUMFRÜCHTEN

Die Erfindung betrifft eine Topfschälmaschine zum mechanischen Schälen von nicht angekochten und/oder nicht angeweichten, rohen Erd- oder Baumfrüchten, mit einem in einem Gehäuse angeordneten, Durchbrechungen aufweisenden Schälmantel und einer rotierenden Bodenscheibe.

Eine zwar auf dem Gebiet der Erfindung liegende, jedoch konstruktiv völlig anders gestaltete und nach einem anderen Schälprinzip arbeitende Topfschälmaschine ist durch die deutsche Auslegeschrift 1 187 417 bekanntgeworden. Zum Schälen von rohen Erd- oder Baumfrüchten, wie Kartoffeln, Mohrrüben u.ä. Früchte, ist dort in einem Gehäuse (Schältopf) ein mit Durchbrechungen versehener, feststehender Schälkorb angeordnet. Der Schälkorb wird unten von einer rotierenden Schäl- bzw. Bodenscheibe begrenzt, die mit Messern und Leitstücken besetzt ist. Eine besondere Gestaltung der Leitstücke bewirkt einerseits eine bogenförmige, gezielt zur Mitte der Schälscheibe gerichtete Bewegung des Schälguts sowie andererseits ein stetiges Drehen und Wenden des Schälguts, mit dem Ziel, das Schälgut allseitig gleichmäßig dünn zu schälen. Um das angestrebte gleichmäßige Schälen zu erreichen, wird die Lehre vermittelt, nicht nur die Schälscheibe mit speziell geformten Leitstücken zu versehen, sondern zum Schälen auch Durchbrechungen im Schälkorb vorzusehen. Denn die Löcher, Schlitze, Messer od.dgl. des rotierenden Schälkorbes sollen ein dünnes Abschälen der Fruchte an der Wand des Schälkorbes bewirken. Übereinstimmend mit anderen bekannten Schälmaschinen besitzt auch diese Topfschälmaschine den außerordentlichen Nachteil, daß große Mengen Frischwasser zugegeben werden müssen, um die Schälreste aus dem Maschineninnern herauszuspülen und abzutransportieren.

Bei anderen bekannten Topfschälmaschinen, wie insbesondere Karborund- oder Messerschälmaschinen, bildet eine entweder mit körnigem Karborund beschichtete oder mit Messern versehene oder gar nur aus Hartgummi bestehende rotierende Schälscheibe den Gehäuseboden. Die Schälung der Erd- oder Baumfrüchte, wie Kartoffeln, Möhren, Zwiebeln, Sellerie, Kohlrabi und Rote Beete, findet in der Regel auf der Bodenscheibe und, insbesondere bei Karborund-Topfschälmaschinen, auch auf der mit einem rauhen Belag, wie Schmirgel oder Karborund, besetzten Gehäusewandung statt. Die Bodenscheibe, die üblicherweise horizontal oder fast horizontal angeordnet ist, übt nämlich eine Zentrifugalkraft aus und schleudert das zu schälende Gut gegen die Gehäusewandung. Obwohl Messerschälmaschinen, die mit einer mit Messern als Schälmittel versehenen Bodenscheibe arbeiten, eine Gehäusewandung aus Hartgummi oder ähnlichem Material, d.h. ohne aufgerauhte Oberfläche besitzen könnten, so bietet doch eine mit körnigem Karborund belegte Gehäusewandung eine höhere Schälleistung. Es handelt sich somit um eine Ausnahme, wenn bei Topfschälmaschinen nur die Bodenscheibe als Schälwerkzeug ausgebildet ist.

Im Gegensatz zu der rotierenden Bodenscheibe, von der Schalenreste aufgrund der Zentrifugalkräfte abgeschleudert werden, setzt sich die aufgerauhte Oberfläche der Gehäusewandung sehr schnell mit Schalenresten zu; ein Schäleffekt läßt sich dann nicht mehr erreichen. Um dem entgegenzuwirken, wird bei Karborund-Topfschälmaschinen bevorzugt eine Karborund-Beschichtung mit 14 Körnchen auf 1 cm² (Körnung C 14) Wandfläche verwendet; je feiner die Karborundbeschichtung ist, desto schneller setzen sich die Poren zwischen den Körnchen zu. Es wird deshalb bei diesen Maschinen mit einem kräftigen Wasserzusatz geschält; beispielsweise wird für eine Topfschälmaschine zum Schälen von Kartoffeln die mit einer Stundenleistung von 450 bis 600 kg Kartoffeln arbeitet, Frischwasser bis 1,5 m³ pro Stunde zugegeben. Das Wasser dient einerseits dem Reinigen der Gehäusewandung, indem es die Poren der Karborundbeschichtung von den Schalenresten freiwäscht; andererseits unterstützt das Wasser den Abtransport der Schalenreste (des Schälabfalls), die zusammen mit dem Wasser über einen Spalt zwischen der Gehäusewandung und der Bodenscheibe in einen Raum unterhalb der Schälscheibe gelangen; von dort werden sie über einen Schalenablauf (Rohr) ausgetragen.

Bei einer Karborund-Verteilung mit 14 - allenfalls 16 -Körnchen auf 1 cm² Wandfläche sind die Vertiefungen bzw. Rauhigkeiten so, daß die Schalenreste mit Hilfe des Wassers - ohne die höhergelegenen Schärfen der Karborundbeschichtung zu erreichen - über die aufgrund der Vertiefungen zur Verfügung stehenden Gänge bzw. Kanäle abtransportiert werden. Die bedingt durch die große Menge zugeführten Frischwassers entsprechend große Menge Abfallwasser, worunter das durch die Schalenreste bzw. abgeriebenen Schalen angereicherte Frischwasser zu verstehen ist, bereitet große Probleme, selbst wenn es gefiltert worden ist. Das Abfallwasser der Schälmaschinen gelangt nämlich entweder in kommunale oder betriebseigene Kläranlagen; neben der erheblichen Belastung der Kanäle bereitet die Ableitung des Abfallwassers somit auf jeden Fall große Kosten. Die große Menge zugegebenen Frischwassers führt schließlich zu einem zu wässrigen, dann auch für die Tierfütterung nur noch bedingt geeigneten Schälabfall; außerdem ließe sich mit großen Mengen Wasser versetztes Futter wegen des entsprechend größeren Platzbedarfs nur unwirtschaftlich transportieren. Eine Versorgung der Topfschälmaschinen mit rezirkulierendem Wasser scheitert daran, daß dieses mit Bakterien versetzt ist.

Der Erfindung liegt die Aufgabe zugrunde, die Betriebsweise einer gattungsgemäßen Topfmaschine zu verbessern, d.h. die vorgenannten Nachteile zu vermeiden und insbesondere ein Schälen ohne oder allenfalls mit nur sehr wenig Frischwasser zu ermöglichen.

Diese Aufgabe wird erfindungsgemäß dadurch gelöst, daß die Innenwandung des Schälmantels mit körnigem Karborund versehen ist und die Durchbrechungen stumpfe Kanten aufweisen, so daß sie ausschließlich der Abfuhr der Schälreste dienen. Mit der Erfindung wird die Erkenntnis realisiert, daß aufgrund der von der Bodenscheibe bewirkten Zentrifugalkräfte, unterstützt außerdem von dem in der Schälmaschine durcheinanderwirbelnden Aufgabegut, die abgeschälten und/oder abgeriebenen Schalenreste innerhalb kürzester Zeit zu den bzw. vor die Durchbrechungen des vorzugsweise konzentrisch angeordneten Schälmantels gelangen; von dort werden sie, begünstigt durch den von dem Aufgabegut auf die Innenwandung ausgeübten Druck, durch die Durchbrechungen gedrückt. Schließlich wird durch die Durchbrechungen verhindert, daß sich die Poren der Karborundbeschichtung des Schälmantels zusetzen, und gleichzeitig eine höhere Schälleistung erzielt, denn die das Zusetzen der Poren der Karborundbeschichtung verhindernden Durchbrechungen des Schälmantels erlauben es, eine sehr viel feinere Körnung, z.B. 24 oder 36 Körnchen pro cm², vorzusehen und damit eine glattere Oberfläche des Schälguts zu erzielen.

Die Durchbrechungen, beispielsweise zylindrische, rechteckige, ovale Löcher oder Schlitze mit einem Querschnitt von etwa 0,1 cm² und mehr, wobei die Kanten der ausschließlich der Abfuhr der Schälreste dienenden Löcher oder Schlitze stumpf oder abgerundet, d.h. nicht geschärft sind, können in beliebiger Verteilung im Schälmantel angeordnet sein; beispielsweise können sich die geschlossenen Mantelflächen und die Durchbrechungen die Waage halten, d.h. in einem ausgewogenen Verhältnis zueinander stehen. Der sich aus den Durchbrechungen ergebende offene Gesamtquerschnitt muß jedoch so groß sein, daß ein ausreichender Abtransport der anfallenden Schälreste gewährleistet ist. Zum Abtransport der Schälreste bedarf es somit keiner Zugabe von Frischwasser mehr, um diese aus dem Maschineninnern herauszuspülen, bzw. aus der Znnenwandung herauszuwaschen.

Die Schälreste treten vielmehr über die Durchbrechungen in den Freiraum zwischen dem Gehäuse und dem Schälmantel ein, von wo sie nach unten abfallen, beispielsweise auf ein unterhalb der Maschine verlaufendes Förderband, oder - was häufiger der Fall ist - in einen einen Schalenablauf aufweisenden, geschlossenen Schalensammelraum unterhalb der Bodenscheibe. Wenn sich vorteilhaft ein Spalt zwischen der Bodenscheibe und dem Schälmantel befindet, können auch solche Schalenreste in den Schalensammelraum gelangen, die sich in dem von dem Schälmantel eingeschlossenen Schälraum im Bereich der Bodenscheibe konzentrieren.

Es wird vorgeschlagen, zumindest einen Schalenauswerfer in dem Schalensammelraum unterhalb der Bodenscheibe rotierend anzuordnen, vorzugsweise antriebsmäßig mit der Bodenscheibe zu verbinden. Der Schalenauswerfer, z.B. ein flächiger, leistenartiger Schaber, Flügel, Schieber, Kratzer oder sonstiger Mitnehmer, dessen Reichweite vorzugsweise über den Umfang der Bodenscheibe hinaus und bis an die Innenwand des Gehäuses reichen kann, erfaßt somit die gesamten anfallenden Schälreste und transportiert diese zu einem Schalenablauf, der beispielsweise ein rechteckiges oder zylindrisches, vom Schalensammelraum rechtwinklig abzweigendes Rohr bzw. eine Rinne sein kann. Während des Rotierens des Schalenauswerfers werden die Schälreste aufgrund der Zentrifugalkräfte entlang der Mitnahmefläche des Auswerfers radial nach außen geleitet und beim Erreichen des Schalenablaufs in diesen hineingedrückt.

Wenn ein Schalenablauf zum Schalensammelraum vorzugsweise tangential angeordnet ist, ergibt sich ein fließendes Überleiten der von dem rotierenden Auswerfer im Schalensammelraum mitgenommenen Schälreste in den Ablauf. Damit ist es nicht mehr erforderlich, große Mengen Wasser - wie bei den bekannten Topfschälmaschinen - schon aus dem Grunde beigeben zu müssen, um einen flüssigen Schalenbrei zu erhalten, der ohne Stauungen bzw. Störungen zu verursachen, ausgefördert werden kann; bei den bekannten Topfschälmaschinen sind die Abläufe nämlich - bezogen auf die Gehäusewand - rechtwinklig angeordnet.

Nach einem Vorschlag der Erfindung kann der Schälmantel aus Segmenten bestehen. In diesem Fall können beim Aufbau des Schälmantels, z.B. durch Einsetzen der Segmente in ein vorbereitetes, korbartiges Trägergerüst, das beispielsweise aus einem - wie bei einem Faß - oberen und einem unteren Ring bestehen kann, die Segmente versetzt zu- und mit Lücken voneinander angeordnet werden; die Durchbrechungen des Schälmantels lassen sich somit durch die Einbaulage der Segmente erreichen. Es können auch die Segmente mit Durchbrechungen versehen sein. Die Segmentbauweise erlaubt ein einfaches und schnelles Anpassen des Schälmantels einer Topfschälmaschine an - bedingt beispielsweise durch das Aufgabegut - veränderte Betriebsbedingungen; wenn eine andere Körnung der Karborundbeschichtung und/oder kleinere oder größere Querschnitte der Durchbrechungen gewünscht werden bzw. zweckmäßig sind, brauchen lediglich die Segmente entsprechend ausgetauscht zu werden. Die Segmente lassen sich mit den stationär in dem Maschinengehäuse angeordneten Trägerringen mittels Schrauben verbinden.

Es empfiehlt sich, eine oberhalb des Schälmantels mündende Wasserzuleitung vorzusehen. Es kann dann Wasser, beispielsweise tröpfchenweise oder als Wassernebel, mittels einer oder mehrerer Düsen in den Schälraum eingebracht und das Schälgut damit von ihm noch anhaftenden, aber bereits abgeschälten Schalen befreit werden. Der Wassernebel oder die -tropfen können - dosiert - während des gesamten oder nur während der letzten Sekunden des Schälvorganges zugegeben werden. Das Schälgut verläßt danach gewaschen die Maschine, und braucht anschließend nicht mehr von noch anhaftenden, losen Schalenteilchen befreit zu werden. Der durch Wassernebel oder Tropfen den Schalenresten zugegebene Wasseranteil ist so gering, daß die Abwasserkanäle hierdurch nicht belastet werden. Hierbei ist zu berücksichtigen, daß beispielsweise Kartoffeln ohnehin einen Wasseranteil von 80% besitzen, und sich dieser Anteil durch die zugegebene Wassermenge allenfalls um 5% erhöht. Der aus der Topfschäl maschine austretende Schalenbrei läßt sich ohne weiteres an Tiere verfüttern, wobei dem Schalenbrei gegebenenfalls vor Ort noch trockene Substanzen, wie Hafer und Kleie, beigemischt werden können.

Die Erfindung wird nachfolgend anhand eines in der Zeichnung dargestellten Ausführungsbeispiels näher erläutert. Es zeigen:

Fig. 1 eine Topfschälmaschine mit einem erfindungsgemäßen Schälmantel-Einsatz, in der Draufsicht, schematisch dargestellt;

Fig. 2 die Topfschälmaschine gemäß Fig. 1, in der Längsrichtung geschnitten, schematisch dargestellt;

Fig. 3 als Einzelheit den in Fig. 2 strichpunktierten und mit X gekennzeichneten Bereich der Topfschälmaschine;

Fig. 4a bis 4d Abschnitte von Mantelabwicklungen mit verschiedenen Querschnitten der Durchbrechungen des erfindungsgemäßen Schälmantel-Einsatzes; schematisch dargestellt; und

Fig. 5a, 5b Abschnitte von Mantelabwicklungen eines aus Segmenten zusammengesetzten Schälmantels.

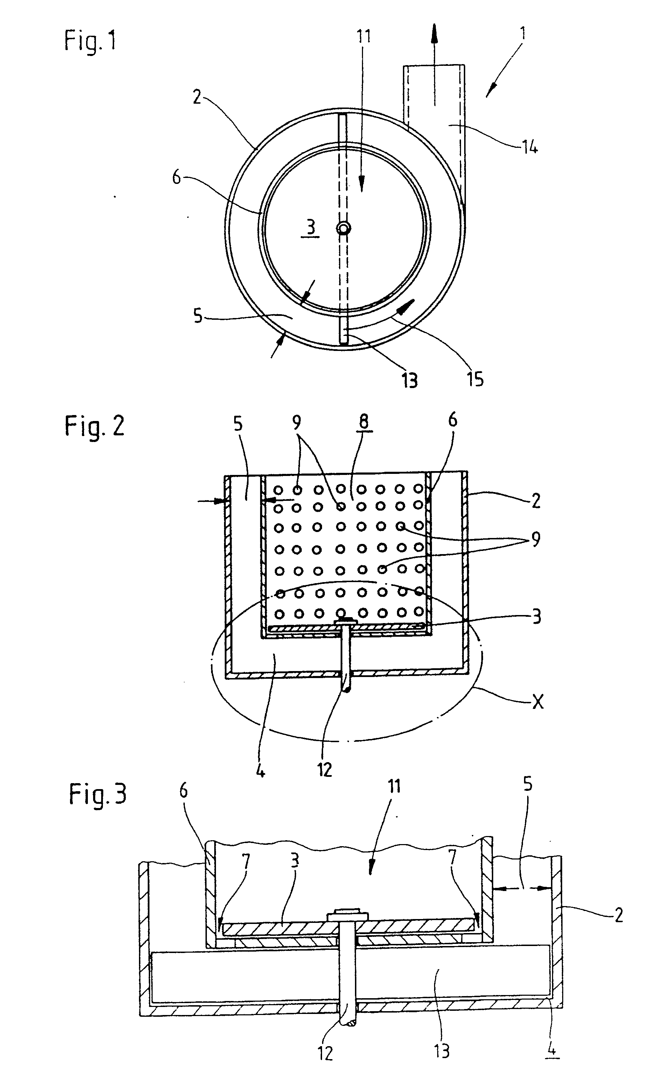

Eine Topfschälmaschine 1 zum mechanischen Schälen von Erd-oder Baumfrüchten besteht aus einem Gehäuse 2, einer Bodenscheibe 3 (Messer- oder Karborundscheibe), einem Schalensammelraum 4 unterhalb der Bodenscheibe 3 und einem konzentrisch, mit radialem Abstand (Freiraum) 5 im Gehäuse 2 angeordneten, zylindrischen Schälmantel 6. Das der Bodenscheibe 3 zugewandte Ende des Schälmantels 6 besitzt einen geringfügig größeren Durchmesser als die Bodenscheibe 3, so daß zwischen der Bodenscheibe 3 und dem Schälmantel 6 ein radialer, zu dem Schalensammelraum 4 offener Spalt 7 vorliegt (vgl. Fig. 3).

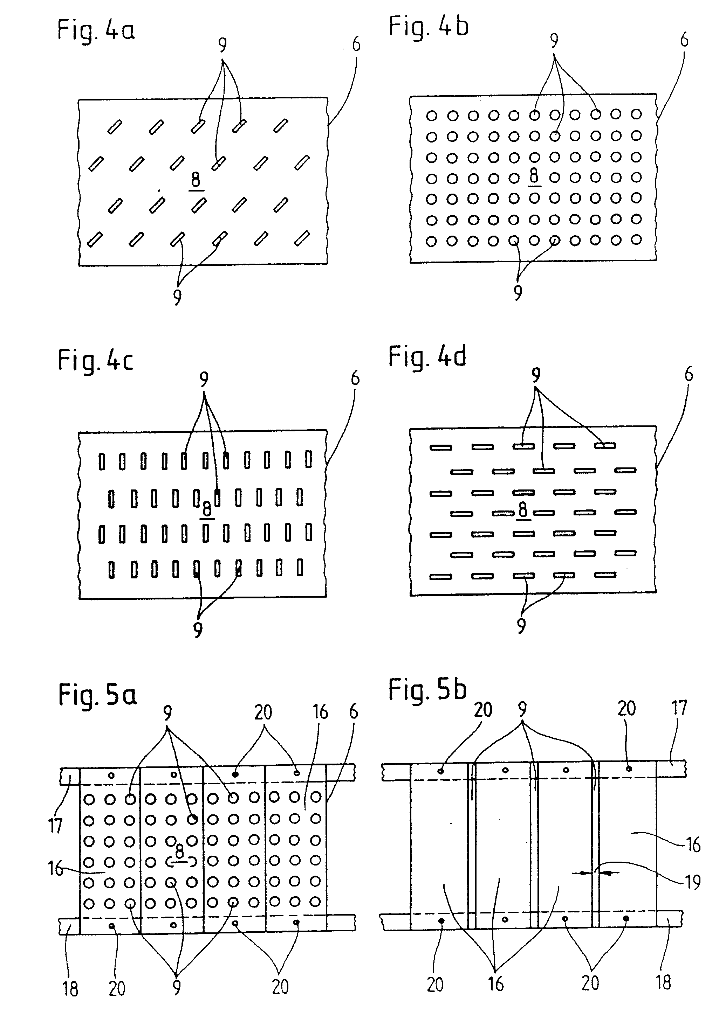

Der an seiner Innenwandung 8 mit körnigem Karborund beschichtete Schälmantel 6 ist mit zahlreichen Durchbrechungen 9 versehen, die einen beliebigen Querschnitt besitzen und in beliebiger Verteilung auf der gesamten Mantelfläche des Schälmantels 6 angeordnet sein können, wie in den Fig. 4a bis 4d dargestellt.

In den von der Innenwandung 8 des Schälmantels 6 begrenzten Schälraum 11 aufgegebenes Schälgut gelangt auf die von einem nicht dargestellten Antrieb über eine Achse 12 angetriebene Bodenscheibe 3, die mit ihrem Karborundbelag oder ihren Messern das Aufgabegut schält und aufgrund der bei der Rotation der Bodenscheibe 3 auftretenden Zentrifugalkräfte gegen die Innenwandung 8 des Schälmantels 6 schleudert; die Karborundbeschichtung der Innenwandung 8 des Schälmantels 6 übt ebenfalls einen Schäleffekt aus. Von der Bodenscheibe 3 werden die Schälreste gegen die Innenwandung 8 des Schälmantels 6 geschleudert; die Schälreste treten von dort, ebenso wie die sich in der Karborundbeschichtung der Innenwandung 8 abreibenden Schälreste über die Durchbrechungen 9 aus dem Schälraum 11 in den Freiraum 5 zwischen dem Gehäuse 2 und dem Schälmantel 6 ein; anschließend gelangen sie in den bodenseitigen Schalensammelraum 4. Im Schalensammelraum 4 vereinigen sich diese Schälreste mit den aus dem Schälraum 11 über den Spalt 7 zwischen der Bodenscheibe 3 und der Innenwandung des Schälmantels 6 in den Schalensammelraum 4 eintretenden Schalen bzw. Schälresten. Zum Entnehmen des geschälten Aufgabeguts aus dem Schälraum 11 weist das Gehäuse 2 der Topfschälmaschine 1 eine - nicht dargestellte - Gehäuseklappe auf.

Das Austragen der angesammelten Schälreste geschieht mittels zumindest eines im Schalensammelraum 4 rotierenden, auf der Achse 12 angeordneten und zusammen mit der Bodenscheibe 3 angetriebenen Schalenauswerfers 13. Die Länge des Schalenauswerfers 13 entspricht etwa dem Durchmesser des Schalensammelraums 4; er reicht mit seinen Enden somit bis nahe an die Wandung des Gehäuses 2. Der Schalenauswerfer 13 nimmt die angesammelten Schalen bzw. Schälreste mit und leitet sie in einen tangential zum Schalensammelraum 4 angeordneten Schalenablauf 14 über; die über den Schalenablauf 14 nach außerhalb der Topfschälmaschine 1 geführten Schälreste werden in einem Sammelbehälter aufgefangen oder über ein Förderband kontinuierlich abtransportiert. Aufgrund der tangentialen Anordnung des Schalenablaufs 14 schiebt der Schalenauswerfer 13 beim Rotieren in Pfeilrichtung 15 (vgl. Fig. 1) die Schälreste ohne wesentliche Umlenkung über den Schalenablauf 14 aus.

Der in den Figuren 5a, 5b dargestellte Schälmantel 6 mit Karborundbeschichtung seiner Innenwandung 8 ist aus Segmenten 16 zusammengesetzt. Zu diesem Zweck befinden sich im Gehäuse 2 ein oberer und ein unterer Ring 17, 18, die ein stationäres Trägergerüst für die Segmente 16 bilden. Die Segmente 16, die gemäß Fig. 5a mit Durchbrechungen 9 versehen und gemäß Fig. 5b mit Abstand voneinander angeordnet sind, so daß aufgrund der Lücken 19 zwischen den Segmenten 16 von oben nach unten durchgängige schlitzartige Durchbrechungen 9 entstehen, werden mittels Schrauben 20 lösbar mit den Ringen 17, 18 verbunden.

## Ansprüche

1. Topfschälmaschine zum mechanischen Schälen von nicht angekochten und/oder nicht angeweichten, rohen Erd-oder Baumfrüchten, mit einem in einem Gehäuse angeordneten, Durchbrechungen aufweisenden Schälmantel und einer rotierenden Bodenscheibe, dadurch gekennzeichnet, daß die Innenwandung (8) des Schälmantels (6) mit körnigem Karborund versehen ist und die Durchbrechungen (9) stumpfe Kanten aufweisen, so daß sie ausschließlich der Abfuhr der Schälreste dienen.

2. Topfschälmaschine nach Anspruch 1, dadurch gekennzeichnet, daß der Schälmantel (6) konzentrisch im Gehäuse (2) angeordnet ist.

3. Topfschälmaschine nach Anspruch 1 oder 2, dadurch gekennzeichnet, daß zwischen der Bodenscheibe (3) und dem Schälmantel (6) ein Spalt (7) ist.

4. Topfschälmaschine nach einem oder mehreren der Ansprüche 1 bis 3, gekennzeichnet durch zumindest einen in einem Schalensammelraum (4) unterhalb der Bodenscheibe (3) rotierenden Schalenauswerfer (13).

5. Topfschälmaschine nach Anspruch 4, dadurch gekennzeichnet, daß die Reichweite des Schalenauswerfers (13) über den Umfang der Bodenscheibe (3) hinausreicht.

6. Topfschälmaschine nach Anspruch 4 oder 5, dadurch gekennzeichnet, daß der bzw. die Schalenauswerfer (13) antriebsmäßig mit der Bodenscheibe (3) verbunden ist bzw. sind.

7. Topfschälmaschine nach einem oder mehreren der Ansprüche 1 bis 6, dadurch gekennzeichnet, daß ein Schalenablauf (14) zum Schalensammelraum (4) tangential angeordnet ist.

8. Topfschälmaschine nach einem oder mehreren der Ansprüche 1 bis 7, dadurch gekennzeichnet, daß der Schälmantel (6) aus Segmenten (16) besteht.

9. Topfschälmaschine nach Anspruch 8, dadurch gekennzeichnet, daß die Segmente (16) in ein Trägergerüst (17, 18) eingesetzt sind.

10. Topfschälmaschine nach Anspruch 8 oder 9, dadurch gekennzeichnet, daß das Trägergerüst zumindest aus einem unteren, zu der Bodenscheibe (3) benachbarten und einem davon entfernten, oberen Ring (18 bzw. 17) besteht.

Fig. 1

Fig. 2

Fig. 3

Fig. 4a

Fig. 4b

Fig. 4c

Fig. 4d

Fig. 5a

Fig. 5b

Europäisches
Patentamt

EUROPÄISCHER
RECHERCHENBERICHT

Nummer der Anmeldung

EP 90 12 1346

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-5 211 07   (BLACHE)<br>* das ganze Dokument *<br>– – – | 1,2 | A 47 J<br>17/18 |
| Y | DE-C-8 024 01   (ALEXANDERWERK AG)<br>* das ganze Dokument *<br>– – – | 1,2 | |
| Y | FR-A-2 135 705   (BOUTIN)<br>* Seite 1, Zeile 28 - Seite 2, Zeile 59; Figur *<br>– – – | 1-3 | |
| Y | FR-A-2 565 086   (MASSU)<br>* das ganze Dokument *<br>– – – | 1-3 | |
| D,A | DE-B-1 187 417   (REFORM-MASCHINENFABRIK PAUL PALMER)<br>* das ganze Dokument *<br>– – – | 1,3,7 | |
| A | US-A-3 931 900   (TIBY)<br>* Spalte 3, Zeilen 2 - 7; Figur 1 *<br>– – – | 3-6 | |
| A | GB-A-8 215 11   (SIMMONDS AEROCESSORIES LTD)<br>* Seite 3, Zeile 126 - Seite 4, Zeile 27; Figur 15 *<br>– – – | 8-10 | |
| A | FR-A-9 624 69   (MIJNLIEFF)<br>– – – – – | | |

RECHERCHIERTE SACHGEBIETE (Int. Cl.5)

A 47 J
A 23 N

Der vorliegende Recherchenbericht wurde für alle Patentansprüche erstellt

| Recherchenort | Abschlußdatum der Recherche | Prüfer |
|---|---|---|
| Den Haag | 21 Februar 91 | BODART P.A. |